# EUROPEAN PATENT APPLICATION

(11) **EP 4 764 233 A1**
(43) Date of publication of application: **24.06.2026**
(21) Application number: 24222262.8
(22) Date of filing: 20.12.2024
(51) Int. Cl.: F16B 19/08, F16B 5/02

(54) **SELF-PIERCING RIVET, SETTING TOOL AND CORRESPONDING METHODS**

(71) Applicant: Newfrey LLC, New Britain, CT 06053 (US)
(72) Inventor: Sartisson, Vadim, 35394 Giessen (DE); Mathia, Steffen, 35394 Giessen (DE)
(74) Representative: Witte, Weller & Partner Patentanwälte mbB

(57) **Abstract**

A self-piercing rivet (10) for joining at least an upper member (Mu) and a lower member (MI) by punching the self-piercing rivet (10) into the at least two members, the self-piercing rivet (10) having a head (12) and a shank (14) axially extending from the head (12), wherein the shank (14) has an upper end (16) adjacent to the head (12) and a lower end (18) distant from the head (12), wherein the shank (16) has a central cavity (20) for receiving at least a part of the at least two members (Mu, MI), and wherein a thread portion (22) which is formed by at least one groove (24), is provided on at least a part of the shank (16) between the upper end (16) and the lower end (18).

## Description

The present disclosure relates to the field of punch rivets for joining members such as sheet members, and relates in particular to a self-piercing rivet for joining at least an upper member and a lower member by punching the self-piercing rivet into the member stack formed by the at least two members, wherein the self-piercing rivet has a head and a shank axially extending from the head, wherein the shank has an upper end adjacent to the head and a lower end distant from the head, and wherein the shank has a central cavity for receiving at least a part of the at least two members.

Further, the present disclosure relates to a method of setting a self-piercing rivet, to a method of removing a self-piercing rivet which has been set in a member stack, and to a self-piercing rivet setting tool.

Punch rivets are a type of fastener used in various industries to join two or more members together. These rivets are designed to create a secure and permanent connection by deforming and locking materials in place. Punch rivets include full body rivets (also called solid rivets) and semi-hollow rivets.

Semi-hollow self-piercing rivets (SPR) are a specific type of punch rivet designed for joining multiple layers of materials, often of different thicknesses or compositions. They are called "semi-hollow" because they have a partially hollow shaft, which allows for an efficient installation process. These rivets are "self-piercing" because they are designed to pierce through material being joined during installation, eliminating the need for pre-drilled holes. This feature is particularly useful when joining materials like metals and/or plastics and/or composites.

SPRs are commonly used in automotive industries, as well as in manufacturing applications where lightweight yet strong joints are required. They provide a convenient way to create strong, reliable connections in situations where pre-drilled holes are impractical.

SPRs are designed to partially pierce through the material layers being joined. In general, however, they do not fully penetrate all the layers. This partial penetration is intentional and provides several advantages, which include, inter alia: avoiding the production of waste; precise control over the depth of penetration; corrosion resistance because there is no opening or hole on the back side of the joint and aesthetic integrity of the materials being joined.

A self-piercing rivet (SPR) has a central cavity which is typically formed as an axial blind hole in the shank. The SPR is typically set by the following procedure. First, an upper member (for example, a high-strength steel plate) and a lower member (for example, an aluminum plate or another steel plate) to be fastened are clamped by a die and a holder (also referred to as clamping device, receiver or nose piece) of a setting tool. An SPR is typically held at a punch side of the setting tool. When the SPR is punched, the shaft of the SPR pierces and penetrates the upper member. When the shaft of the SPR has penetrated the upper member and enters the lower member, the lower surface of the lowest member comes into contact with the bottom of the die, wherein the bottom of the die cavity supports the lower member. As a result, the hollow shaft of the SPR receives a reaction force from the lower member and opens in a ring shape in the lower member without fully penetrating the lower member. A mechanical interlock is formed by flaring the lower end of the shaft of the SPR, and the upper member and the lower member are mechanically fastened.

Document WO 2019/233640 A1 relates to a full body solid punch rivet which has a head and a shaft. The rivet shaft end opposite the rivet head is equipped with a piercing attachment, the diameter of which is at least partly smaller than the diameter of the rivet shaft. A thread is formed at the outer circumference of the rivet shaft. The at least thread has a positive pitch which is oriented opposite the piercing direction. Protuberances are formed on the components by punching the self-piercing rivet. The protuberances form a threaded neck in the components. The self-piercing rivet can be screwed out of the two components along the threaded neck.

Document JP 2013148122 A2 relates to method for connecting a plurality of members using a self-piercing rivet wherein at least one member is a fiber-reinforced resin including a fiber material inside. The self-piercing rivet has a hollow space which has an inner thread whose cross-section is tapered and has a protrusion and recess portion in a section of an outer circumferential surface thereof where the plurality of members is connected. At least one of the members formed by a fiber-reinforced resin including a fiber material inside a thermoplastic resin. The protrusion and recess portion are embedded in at least the fiber-reinforced resin material. A screw material is screwed to the inner thread. The screw material applies a pressure to the side with respect to an axis of the self-piercing rivet, which forms a connection structure 10. The rivet cannot be removed.

Document EP 4 124 765 A1 relates to a full body punch rivet for punch riveting at least two components. The punch rivet comprises a rivet head with a driving profile; a rivet shank extending from the rivet head and having a rivet punching edge and a thread arranged between the rivet punching edge and the rivet head. The rivet shank has at least one rivet groove which interrupts the thread and, if appropriate, the rivet punching edge. The diameter of a base of the at least one rivet groove is equal to the thread core diameter of the thread.

Document WO 2011/057933 A1 relates to a self-piercing rivet having a rivet head implementing a head-like expansion in particular having a truncated cone shape, and a shaft adjacent to the rivet head comprising at least one shaft groove, wherein the shaft pierces at least two components, forming a pierced hole, for producing a rivet connection between the at least two components contacting each other, wherein a groove is subsequently embossed about the end of the shaft, whereby the material of the component is subsequently pressed into the at least one shaft groove, using at least one cold-forming press process.

Document US 6108890 A relates to a method of removing punch rivets, which are set into a workpiece and have a male die end for driving the punch rivet and an opposite female die end which penetrates the workpiece. A pin is placed with its front end onto the male die end so as substantially to cover the latter and, with a simultaneous supply of energy through the pin, heats the contact area between pin and male die end up to a fusion temperature in the contact area, whereupon after cooling of the contact area the pin is retracted counter to the pressure of an abutment supported on the workpiece and carries along the punch rivet which is thereby withdrawn from the workpiece.

Document US 2004/096 295 A relates to a self-piercing rivet wherein the hollow shell has an external spiraling, wherein the spiraling is with respect to the axis of rotation of the hollow shell. Once installed in a stack of sheets, the spiraling prevents the riveted sheets from mutually separating and the rivet loosening with respect to the sheets.

Document US 2013/315 690 A relates to a self-piercing rivet which integrally joins an upper plate member and a lower plate member overlapping each other. The self-piercing rivet includes a head portion, a shank portion integrally connected with the head portion, and a plurality of ribs formed to an external circumferential surface of the shank portion along a length direction of the shank portion in a spiral form, so that the rivet is to be rotated when being punched into the members.

US 2014/023 452 A relates to a clinch screw which can be secured through a hole in a sheet of metal by a simple press-in application like a tack pin. An undercut clinch feature on the screw shank just underneath the head and above a threaded bulb portion of the shank secures the screw to the sheet as material from the sheet cold-flows into the undercut. Simultaneously, sheet material also flows around and between the bulb threads which forms partial female threads in the sidewall of the sheet hole and provides added pull-out resistance. The screw can then be simply turned out to remove it. In doing so additional female threads are cut into the upper portion of the hole sidewall as the threaded bulb moves upward and then out of the hole. A re-useable threaded hole in the sheet is left behind.

The joints which are produced by means of the above-described self-piercing rivets, particularly those with a central cavity, are permanent. In other words, it is not possible to separate the members that have been joined, without destroying the rivet and possibly parts of the members as well. Therefore, complex manufacturing steps have to be conducted to re-establish the joint, which are typically based on a different type of manufacturing technology. In consequence, the manufacturing costs and labor in case that a set rivet joint has to be dismantled, are increased.

It is the object of the present disclosure to provide an improved self-piercing rivet, an improved method for setting a self-piercing rivet, an improved method of removing a self-piercing rivet, and an improved self-piercing rivet setting tool.

The above object is achieved by a self-piercing rivet for joining at least an upper member and a lower member by punching the self-piercing rivet into the at least two members, the self-piercing rivet having a head and a shank axially extending from the head, wherein the shank has an upper end adjacent to the head and a lower end distant from the head, wherein the shank has a central cavity for receiving at least a part of the at least two members, and wherein a thread portion which is formed by at least one groove/thread is provided on at least a part of the shank between the upper end and the lower end.

The above object, further, is achieved by a method of setting a self-piercing rivet, including the steps of positioning a member stack of at least an upper member and a lower member on a die of a setting tool, and punching a self-piercing rivet of the above-described type into the member stack, wherein material of at least one of the at least two members of the member stack is pressed into the at least one groove of the thread portion on account of a pressure-inducing portion of the self-piercing rivet, and/or a pressure-inducing portion of the die, and/or a pressure-inducing portion of the punch), and/or a pressure-inducing portion of a holder of a rivet setting tool.

In addition, the above object is achieved by a method of removing a self-piercing rivet which has been set in a member stack by the above method, from the member stack by rotating the self-piercing rivet so that the self-piercing rivet, aided by the thread portion, is screwed out of the member stack.

Also, the above object is achieved by a method of repairing a joint made by the above setting method using the above-described self-piercing rivet, including the step of removing the self-piercing rivet by the above method, and a step of (i) screwing the removed self-piercing into the member stack; or (ii) screwing a new self-piercing rivet, which is of the same type as the removed self-piercing rivet, into the member stack; or (iii) screwing a repair element into the member stack, the repair element having a shank as the removed self-piercing rivet and a thread portion on at least a part of the shank, wherein the repair element thread portion has the same dimensions as the thread portion of the removed self-piercing rivet or has at least one different dimension, particularly larger dimension, and/or is provided only at a lower part of the shaft.

Finally, the above object is achieved by a self-piercing rivet setting tool which comprises a die on which a member stack of at least an upper member and a lower member can be positioned, and a punch which is adapted to punch a self-piercing rivet of the above-described type into the member stack

The insertion of the rivet is preferably purely translational (without rotation). The removal is preferably purely rotational (without additional, active pulling on the element).

Preferably, the punch has two functions: a) the punching of rivet into the members and positioning of the rivet, and b) on account of the punching force, the displacement of the joining materials, causing material flow processes to occur and thus filling the at least one groove with material of the lower member, for example. The at least one groove can be partially filled with material. Preferably, the upper member is harder than the lower member, so that it is essentially material of the lower member that flows into the groove.

The self-piercing rivet has a central cavity for receiving at least a part of the at least two members (a piece punched out). The central cavity may be realized as a blind hole extending from the lower end of the shank. The thread portion is configured such that material of at least one of the members to be joined is pressed and flows into the at least one groove. In order to remove the self-piercing rivet, therefore, it is possible to apply a rotation force or torque to the rivet which subsequently leads to an axial movement of the rivet with respect to the member stack, so that the self-piercing rivet can finally be dismantled from the member stack. Typically, the rivet is not destroyed by this procedure, and even the joint location of the member stack is preferably not destroyed. Therefore, it is in many cases possible to reinsert the self-piercing rivet into the member stack after it has been removed therefrom, by re-screwing the self-piercing rivet into the member stack (applying an opposite rotational force to the rivet).

Alternatively, a repair element may be inserted after the removal of the self-piercing rivet. The repair element may for instance have a thread portion that is similar to or slightly greater than the thread portion of the rivet. The outer diameter of the thread portion is preferably larger than the outer diameter of the thread portion of the removed rivet and is preferably smaller than 1.15-times the outer diameter of the thread portion of the removed rivet.

The self-piercing rivet is configured to be punched axially straight and without a rotation into the members which form the member stack, when setting the self-piercing rivet. It is not necessary to provide pre-drilled holes in the member stack. The members are typically made of a metal material, but at least some could also be made of composite material. The rivet itself is preferably also made of metal material, particularly of steel.

The self-piercing rivet has a head and a shank. In many cases, the head has a larger diameter than the shank. However, this is not necessarily the case, as the head may be formed simply by an upper portion of the shank. The rivet is preferably rotationally symmetric with respect to its longitudinal axis, except for the thread portion and optionally a tool engagement portion for rotating the rivet.

The self-piercing rivet may be configured to be set into the member stack such that the head or a part of the head protrudes from the upper surface of the upper member thereof. However, in some cases, the self-piercing rivet is configured to be fully pushed into the member stack, in which case the head is typically a countersunk head.

The lower end of the shank is typically formed as a ring-shaped cutting portion. The lower part of the shank may include a tapered portion on account of which the thickness of the hollow shank is reduced toward the lower end thereof. The ring-shaped lower end may be formed as an acute edge. In many cases, however, particularly when joining high-strength steel material, the lower end of the shaft is formed by a ring-shaped portion, which has a radial thickness of not less than 0.25-times of the radial thickness of the shank in the area of its upper end.

The radial thickness of the shank is defined as a difference between the outer diameter of the shank and the inner diameter of the shank divided by two.

In the method of setting a self-piercing rivet of the type mentioned above, it is optionally possible to preheat the member stack and/or the rivet, e.g. by laser irradiation, by a plasma heating device, by electric arc heating, by induction heating, or by ultrasonic heating.

The setting method is typically conducted such that the lower end of the self-piercing rivet does not pierce through the lower member of the stack. However, in some cases it might be advantageous to let the rivet pierce the lower member, e.g. for accommodating certain material thicknesses of the members or for applying a torque for removing the rivet.

The die typically has a support surface for supporting a lower surface of the lower member, and a central recess with a diameter larger than the diameter of the shank. The recess of the die is used for shaping the lower side of the member stack, and optionally for aiding in a material flow into the groove of the thread portion.

The die may be a fixed die. In other embodiments, the die may have movable portions in order to change the diameter of the recess and/or the bottom depth of the recess.

In the method of removing the self-piercing rivet which has been set in a member stack, a tool may engage the self-piercing rivet at its head (or in the area of a protruding lower end of the shank), in order to apply a screwing torque for removing the rivet. In some cases, a dedicated (e.g. non-circular) tool engagement portion may be provided at the head and/or at the shank end.

The method of removing the self-piercing rivet leaves the rivet and the member stack preferably essentially undamaged. Therefore, in many cases it is possible to screw the rivet again into the member stack after it has been removed by the above-defined method.

The self-piercing rivet setting tool preferably comprises a holder (nosepiece) for clamping the member stack between the die and the holder before the rivet is punched into the member stack. The holder may also serve to guide the punch in the axial direction. In one embodiment, the holder is used to press onto the upper member so as to generate a material flow into the groove of the thread portion, a portion of the holder thereby acting as a pressure-inducing portion. In this case, it is preferred if the head of the rivet has an outer diameter which is essentially not larger than the outer diameter of the shank.

The thread portion can be formed as an outer thread portion on an outer circumference of the shank and/or as an inner thread portion on an inner circumference of the shank, e.g. in the cavity.

The object is achieved in full.

In a preferred embodiment of the self-piercing rivet, the self-piercing rivet comprises a pressure-inducing portion which is configured to contact an upper surface of the upper member and to press material of at least one of the at least two members into the at least one groove of the thread portion when the self-piercing rivet is punched into the at least two members.

In general, it is possible to provide a pressure-inducing portion at the die and/or at the punch and/or at a holder of the rivet setting tool, wherein such pressure-inducing portion is configured to press material into the at least one groove of the thread portion. In this preferred embodiment, a pressure-inducing portion is provided at the self-piercing rivet itself, in addition to such portions on the die and/or the punch, or as an alternative hereto. In a preferred embodiment, a standard rivet setting tool can be used in combination with a self-piercing rivet which has such a pressure-inducing portion. In other words, a rivet setting tool can be used which is normally used for setting self-piercing rivets which do not have a thread portion and are not removable.

The pressure-inducing portion is preferably provided such that it is distinct from the head of the shank, or maybe part of the head. In some embodiments, the pressure-inducing portion of the rivet is fully pressed into the upper member of the member stack. Preferably, the pressure-inducing portion of the rivet assists in pressing material of the upper member downwardly so as to create a radial flow of material of the lower member into at least a part of the thread portion. In some cases, material of the upper member is also pressed radially into a part of the thread portion.

The thread portion may be an inner thread portion, in which case a pressure-inducing portion can be provided at a central portion of the die, which presses a piece punched out from the lower member, and/or a pressure-inducing portion can be provided at a bottom of the blind-hole cavity of the shank, which presses a piece punched out from the upper member, so as to let the material thereof flow into the inner thread portion.

Also, it is possible in this case that the rivet head has a through hole through which the punch acts on the punched-out pieces within the central cavity so as to let material thereof flow into the groove of the inner thread.

Preferably, however, the thread portion is an outer thread portion.

In this case, it is preferred if the pressure-inducing portion is arranged between an upper member contact part of the head, which is configured to contact the upper surface of the upper member when in a set state, and an upper end of the outer thread portion.

In this case, the pressure-inducing portion may be formed by an overhung portion which extends from the underside of the head in a direction to the lower end of the shank and beyond the upper member contact part of the head.

Also, it is possible to provide the pressure-inducing portion as a ring portion around the outer diameter of the shank.

Preferably, the pressure-inducing portion comprises a pressure-inducing surface which extends radially or with a downward inclination or with an upward inclination with respect to an axis of the shank.

Preferably, the pressure-inducing surface extends radially or with a downward inclination, so as to assist the flow of material of the respective member in a radially inward direction, i.e. into a direction to the outer thread portion.

The pressure-inducing portion may have the same diameter as the head, particularly if formed by an overhung portion with a downward inclination. In another embodiment, an outer diameter of the pressure-inducing portion is smaller than an outer diameter of the head, and larger than an outer diameter of the shank.

Preferably, an outer portion of the shank from which the pressure-inducing surface extends, is axially arranged between an upper end of the outer thread portion and an upper member contact part of the head, which is configured to contact the upper surface of the upper member when in a set state.

Further, it is preferred if the pressure-inducing surface extends with respect to the axis of the shank at an angle in a range from 30° to 110°, inclusive, preferably in a range from 50° to 90°, inclusive. An angle of 90° corresponds to a strictly radial extension of the pressure-inducing surface. An angle smaller than 90° corresponds to a downward inclination of the pressure-inducing surface.

In general, it is preferred if the thread portion includes a linear portion and a tapered portion, the tapered portion being arranged closer to the lower end of the shank than the linear portion, wherein it is preferred if the tapered portion is ogive shaped.

Such a thread portion facilitates the insertion of the rivet into the member stack during the punch-in phase, on account of the tapered portion. On the other hand, the linear portion supports the step of screwing the rivet out of the member stack after having been set.

In an embodiment, it is preferred if the self-piercing rivet is configured to not be deformed (meaning not or essentially not be deformed) when being punched into the at least two members.

While prior art semi-hollow self-piercing rivets generally deform in an area of the lower end of the shaft, in order to provide a sufficient undercut effect (also called interlock) for securing the joint between the members, such deformation is not necessary or at least not intended in this embodiment, because material of the members is pressed into the groove of the thread portion, thus providing sufficient undercut effect for securing the finalized joint.

In another embodiment, the self-piercing rivet is configured to be deformed when being punched into the at least two members, particularly by spreading or flaring of the shank.

In this case, the deformation of the shank is preferably small. A small deformation shall mean a deformation which does not substantially impede a removal of the rivet by applying a torque thereto.

In a preferred embodiment, at least one of the head and the shank has a tool engagement feature. Such features can be a non-circular outer circumference of the head, a non-circular inner circumference of the shank, a non-circular blind hole in the upper surface of the head, or the like, for applying a tool. The feature can be a hexagonal shape, or can be a star shape, for example.

In general, the cavity of the shank is formed by a blind hole. In some cases, however, the self-piercing rivet has an axial through-hole which forms the cavity, and which extends to the upper surface of the head. In this case, the through hole, in the area of the head, may form a tool engagement feature.

The thread portion preferably includes a fine thread portion, like for example a metric outer thread portion like M5, M5.5, M6, or a metric inner thread portion like M3.5, M4, M4.5.. The fine thread portion preferably has a pitch in the range from 0.25 to 0.45. In other embodiments, the thread portion can be non-metric, e.g. a saw-tooth thread portion.

Further, it is preferred if the thread portion includes a thread-rolling thread portion, which is adapted to form a thread in the member stack when the rivet is screwed out, particularly in an area where material of a member has not flown into the groove of the thread portion.

Further, it is preferred in general if the self-piercing rivet is configured to be punched into the at least two members, wherein the upper member of the at least two members is made of steel, preferably of high-strength steel. An example of the high-strength steel is DP600 (to be exact, CR330Y590T-DP according to Standard VDA239-100).

In another preferred embodiment, the lower member of the at least two members into which the self-piercing rivet is punched, is made of an aluminum alloy, for example an aluminum alloy of the type EN AW 5182.

Further, it is preferred if the upper member has a thickness in a range from 0.3 mm to 2.0 mm, inclusive, preferably in a range from 0.5 mm to 1.6 mm, inclusive.

In addition, it is preferred if the lower member has a thickness in a range from 1.0 mm to 4.0 mm, inclusive, preferably in a range from 2.0 mm to 3.0 mm, inclusive.

Further, it is preferred if the self-piercing rivet is made of steel, preferably of a steel alloy, particularly a boron-alloyed steel alloy. As an example, the rivet is made of 37MnB4 steel or 45B2 steel (Standard EN 10083-3).

In addition, the self-piercing rivet preferably has a hardness in a range of H4 (480+-30HV10) to H6 (555+-30HV10), or higher (Vickers hardness, DIN EN ISO 6507).

It is to be understood that the member stack can be formed by the upper member and the lower member. In other embodiments, an intermediate member or multiple intermediate members can be arranged between the upper member and the lower member.

It is clear that the above-mentioned and hereinafter still to be described features are not only usable in the respectively combination, but also in other combinations or alone, without departing from the scope of the present invention.

Embodiments of the invention are depicted in the drawings and will be explained in more detail in the following description. In the drawings:
- Fig. 1: is a schematic view of a self-piercing rivet according to one embodiment;
- Fig. 2a: shows a schematic view of two different embodiments of a self-piercing rivet;
- Fig. 2b: shows a schematic view of another embodiment of a self-piercing rivet;
- Fig. 3: shows another embodiment of a self-piercing rivet;
- Fig. 4: shows another embodiment of a self-piercing rivet;
- Fig. 5: shows another embodiment of a self-piercing rivet;
- Fig. 6: shows another embodiment of a self-piercing rivet;
- Fig. 7: shows another embodiment of a self-piercing rivet;
- Fig. 8a-8e: show steps in a method for setting a self-piercing rivet in a material stack according to one embodiment;
- Fig. 9a-9d: show steps of a method of setting a self-piercing rivet according to another embodiment;
- Fig. 10: shows a schematic sectional view of a set rivet illustrating a number of optional modifications of the self-piercing rivet and of the setting tool;
- Fig. 11: shows another embodiment of a self-piercing rivet set in a member stack with a setting tool;
- Fig. 12: shows two further embodiments of a self-piercing rivet set in a respective member stack with their respective setting tool;
- Fig. 13: shows a schematic view of another embodiment of a self-piercing rivet having a spreadable shank, before being set; and
- Fig. 14: shows the rivet of Fig. 13 after having been set, so that its shank is spread and an outer thread thereof is aligned with the joining axis.

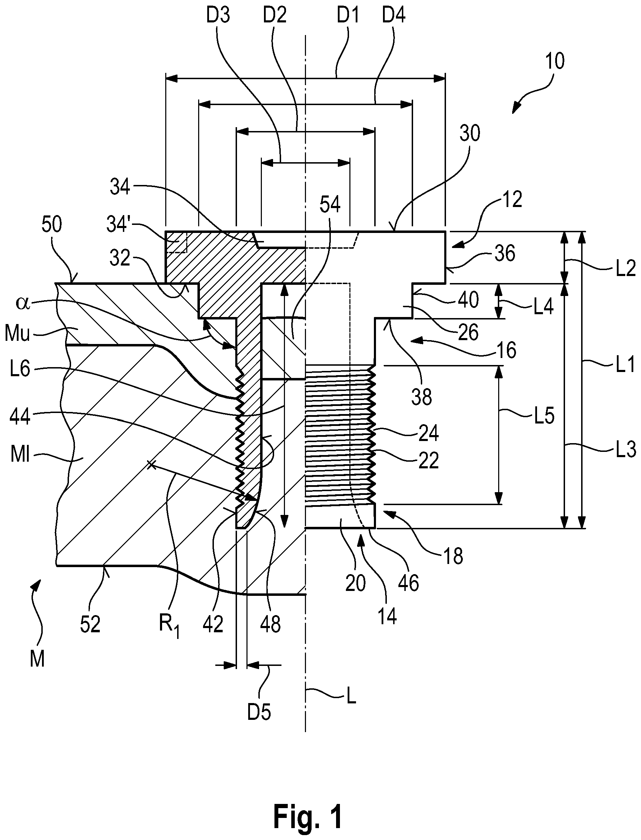

Fig. 1 is a schematic view of a self-piercing rivet 10 which has a cavity, wherein the left hand side of Fig. 1 is a longitudinal cross section of the rivet in a state set in a member stack M, and wherein the right hand side of Fig. 1 is a side view of the rivet.

The self-piercing rivet 10 comprises head 12 and a shank 14 which extends from the head 12 along a longitudinal axis L. The shank 14 has an upper end 16 proximal to the head 12, and a lower end 18 which is distal from the head 12.

A cavity 20 which is formed for example as a blind hole extends from the lower end 18 axially into the shank 14.

A thread portion 22 is provided on an outer circumference of the shank 14. The thread portion 22 comprises at least one groove 24.

Further, the self-piercing rivet 10 includes a pressure-inducing portion 26, which is arranged at the outer circumference of the shank 14 and will be explained later.

The head 12 has a head upper surface 30 and a head lower surface 32. The head lower surface 32 is configured to contact, in the set state, the member stack M, particularly an upper member Mu thereof. Therefore, the head lower surface 32 is an upper member contact part in the present case. The head lower surface 32, in the set state of the rivet, preferably is level with the upper surface of the upper member. The head lower surface may be fully covered by the pressure-inducing portion 26.

The head 12, further includes a tool engagement feature 34 which may be formed by a central recess in the head upper surface 30, wherein the recess has a non-circular cross section, e.g. a star-shaped cross section, such as "Torx " or the like. For instance, an internal star drive (or internal "Torx") is provided, and the outer diameter of the star drive provided in the head upper surface 30 may be substantially equal to an internal diameter of the cavity 20, wherein the inner diameter of the star drive is substantially smaller. As an alternative the tool engagement feature 34' may be provided in the area of a head outer circumference 36. An outer star drive (also caller outer "Torx") may be provided, with an outer diameter which may be for instance bigger than an outer diameter of the shank 14, and an inner diameter which is smaller than the outer diameter of the shank, but bigger than an inner diameter of the shank 14.

The head lower surface 32 extends in this embodiment in the radial direction but may also be formed so as to be slanted, particularly for forming a counter-sunk head.

The pressure-inducing portion 26 has a pressure-inducing surface 38 which extends in the radial direction in the present case. The pressure-inducing surface 38 extends radially from the outer circumference of the shank 14. The pressure-inducing portion 26 has an outer circumference 40 which is preferably aligned in the axial direction and has preferably a circular cross-sectional diameter.

The shank 14 has a shank outer circumference 42 which has preferably a circular cross section. Further, the shank 14 has a shank inner circumference 44 which is preferably circular in cross section. The shank inner circumference 44 corresponds to the inner diameter of the cavity 20.

The lower end 18 of the shank 14 forms a shank ring portion 46 which is formed as a cutting portion.

The cross section of the cavity 20 is generally circular. In an upper region thereof, the diameter of the cavity is constant. In a shank inner circumference lower portion 48, the shank inner circumference 44 tapers gradually so as to increase the inner diameter of the cavity 20 gradually when approaching the lower end 18. The shank inner circumference lower portion 48 can have an arcuate shape, as is shown by a radius R1 in Fig. 1. In another embodiment, the shank inner circumference lower portion 48 can have a chamfer or bevel segment.

The member stack M includes an upper member Mu and a lower member MI. In the embodiment of Fig. 1, the member stack M includes only the upper member Mu and the lower member Ml. In other embodiments, the member stack M may include further member(s) axially between the upper member Mu and the lower member Ml.

The upper member Mu has an upper surface 50. The lower member MI has a lower surface 52.

An outer diameter of the head 12 is shown at D1. An outer diameter of the shank 14 is shown at D2, wherein D2 is smaller than D1. An inner diameter of the shank 14 (diameter of the cavity 20) is shown at D3.

The outer circumference 40 of the pressure-inducing portion 26 has a diameter D4, wherein D2 < D4 < D1. In another embodiment, D4=D1.

The shank 14 has a radial thickness which corresponds in its upper region to the difference between the outer diameter D2 and the inner diameter D3, divided by two. Due to the shank inner circumference lower portion 48, the radial thickness of the shank 14 at its lower end 18 is smaller, but preferably greater than 0, as is shown at D5. The radial depth of the at least one groove of the thread portion is preferably not taken into account in this calculation.

The shank 14 has a constant outer diameter D2 over its entire length in this embodiment. The thread portion 22 is preferably provided between the pressure-inducing portion 26 and the lower end 18 of the shank 14. The thread portion 22 may extend over the entire length of the shank or may extend over only a portion thereof, preferably a lower end portion of the shank. However, in other embodiments, the shank 14 may have an outer diameter which is greater in its upper part (in the vicinity of the head).

The rivet 10 has an axial length L1 which extends from the head upper surface 30 to the shank ring portion 46. Further, the head 12 has an axial length L2. In the present case, the rivet 10, when being set in the member stack M, protrudes from the upper surface 50 of the upper member Mu by the head length L2. The shank 14 has an axial length L3 which extends from the head lower surface 32 to the shank ring portion 46.

The pressure-inducing portion 26 is arranged at an upper region of the outer circumference of the shank 14 and has an axial length L4.

The thread portion 22 extends over an axial length L5, wherein (L3 - L4) ≥ L5.

The cavity 20 has an axial length L6, wherein it is preferred if L6 ≥ L3. In an embodiment, L6=L1.

The pressure-inducing portion 26 includes the pressure-inducing surface 38 which extends radially from the shank outer circumference 42 of the shank 14, i.e. at an angle α = 90°.

In other embodiments, the angle α can be smaller than 90°. In general, 50° ≤ α ≤ 90°.

An orientation of the pressure-inducing surface 38 within this angular range ensures that material of at least the upper member Mu is pressed downwardly onto the lower member MI and may move radially inwardly when the rivet 10 is punched into the member stack M. The lower member MI is typically supported by a die and is preferably made of a material softer than the upper member material. This ensures that material of the lower member MI and optionally of the upper member Mu flows into the groove 24 of the thread portion 22. More particularly, the upper member Mu is "pierced" or penetrated and the material of the lower member MI flows transversely into the at least one groove 24.

On account of the material of the member stack M within the groove 24, the members of the member stack M are firmly held together in the axial direction.

Preferably, the rivet 10 is therefore configured so as to not deform at the area of the lower end 18 of the shank 14 when being punched into the member stack M.

As is shown in Fig. 1, the step of punching the rivet 10 into the member stack M has the consequence that at least the upper member Mu is punched through so that a piece 54 that has been punched out is located within the cavity 20, particularly at an upper portion thereof.

As far as the above description refers to designations like upper or lower, it is to be noted that these designations are merely used to describe relative positions and is not considered to be limiting.

In case that the joint formed by the rivet 10 set in the member stack M is to be released or dismantled, the rivet 10 can be set into rotation by applying a torque thereto, e.g. at the tool engagement feature 34. On account of the rotation of the rivet 10, the rivet is screwed out of the member stack M. This can be done essentially without damaging the rivet 10 or the member stack M. Therefore, it is also possible, in general, to re-screw the rivet 10 again into the member stack M after it has been removed therefrom, wherein, similar to the effect of a screw joint, a corresponding connection between the members of the member stack M can be achieved.

In this embodiment, a pressure-inducing portion 26 is provided on the rivet itself. Alternatively, or accumulatively, pressure-inducing portions can be provided on a die, on a punch, and/or on a holder of a rivet setting tool, as will be described later.

In the following, further embodiments of self-piercing rivets are described. These embodiments have the same structure and the same function as the self-piercing rivet 10 of Fig. 1. Same elements are therefore designated by same reference numerals. In the following, essentially the differences are explained.

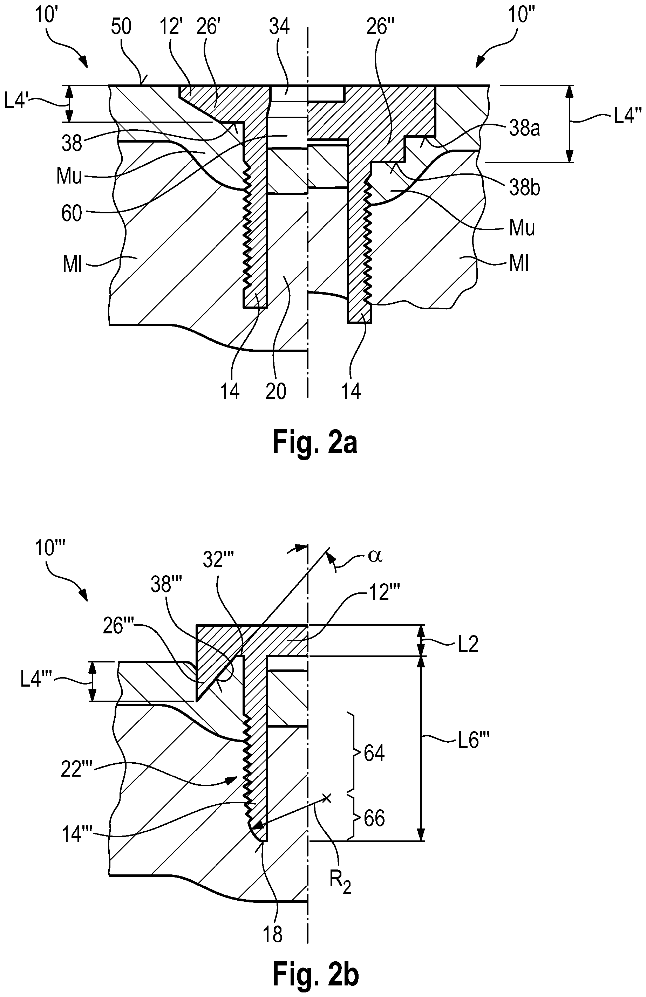

Fig. 2a shows on the left side a self-piercing rivet 10' which has a countersunk head 12' which is integrated with a pressure-inducing portion 26'. The rivet 10' is punched into the member stack such that an upper surface of the head 12' is essentially flush with the upper surface 50 of the upper member Mu. Further, an outer circumference of the pressure-inducing portion 26 is not axial but is slanted so as to obliquely connect the lower end of the pressure-inducing portion 26' with the outer circumference of the head 12'.

Further, the rivet 10' comprises a cavity 20 which is connected with the tool engagement feature 34 so as to form a through hole 60. In other words, the rivet 10' of the left side of Fig. 2a is a hollow rivet. The inner diameter of the perimeter of the non-circular tool engagement feature 34' is preferably identical or smaller than the inner diameter of the cavity 20 (in case of an inner star bit tool engagement feature 34', for example).

On the right hand of Fig. 2a, a self-piercing rivet 10" is shown which is also provided with a countersunk head. Further, the pressure-inducing portion 26" includes two pressure-inducing surfaces 38a, 38b, which are arranged at a distant from each other, so as to form a step-like structure. The number of steps of the pressure-inducing portion 26" is not limited.

Preferably, the steps are arranged such that the pressure-inducing surfaces 38a, 38b, etc. are staggered.

Another self-piercing rivet 10‴ is shown in Fig. 2b. In this case, the head 12‴ has an axial length L2 and a head lower surface 32‴ which is directly adjacent to the outer circumference of the shank 14‴. The pressure-inducing portion 26‴ is formed as an overhung portion which extends from the head lower surface 32‴ downwardly into the direction of the lower end of the shank 14‴. In the present case, the pressure-inducing portion 26‴ includes a slanted pressure-inducing surface 38‴ which is arranged at an angle α of less than 90° with respect to the longitudinal axis L, wherein 50° ≤ α < 90°. In another embodiment, the overhung portion is formed as a ring portion which protrudes downwardly from an underside of the head, preferably from a radial outer portion thereof, wherein the underside of the head is preferably oriented radially so as to establish an angle α of approximately 90°. In the other embodiment, preferably, a gap exists between an inner circumference of the overhung ring portion and the outer diameter of the shaft, which gap may have a rectangular shape.

On account of the slanted pressure-inducing surface 38‴, material of the member stack can be more efficiently pressed radially into the groove of the thread portion 22‴. On account of the overhung pressure-inducing portion, material of the upper member can enter the radial space between the overhung portion and the shank, so that more material of the lower member can flow radially into the thread portion.

In the present embodiment, the thread portion 22‴ includes a linear portion 64 which is arranged in an area of the shank 14‴ which has a constant outer diameter.

In the area of the lower end of the shank 14‴, the outer circumference of the shank 14‴ tapers inwardly, as shown by a radius R2.

In the present embodiment, a tapered portion 66 of the thread portion 22‴ is arranged in this lower portion of the shank, so that the tapered portion 66 has a smaller diameter in an area adjacent to the lower end 18 and has a larger diameter adjacent to the linear thread portion 64. In some embodiments, the diameter of the root of the thread portion can be constant over the entire axial length thereof, and the outer diameter of the thread decreases gradually in the tapered portion 66.

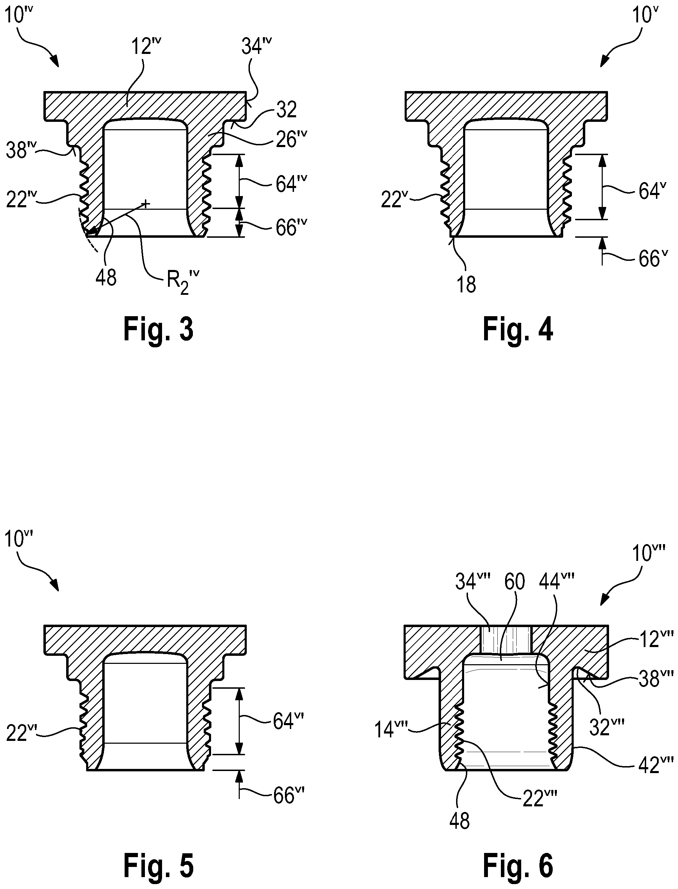

In figures 3 to 7, further embodiments of self-piercing rivets are shown which correspond with respect to structure and function to the above-described self-piercing rivets. Same elements are designated with same reference numerals. In the following, essentially differences are explained.

In Fig. 3, a self-piercing rivet 10^{IV} which corresponds essentially to the self-piercing rivet 10 of Fig. 1, wherein the thread portion 22^{IV} includes a thread linear portion 64^{IV} and a thread tapered portion 66^{IV}. In the self-piercing rivet 10^{IV}, the tapered portion 66^{IV} is ogive-shaped and follows a radius R2^{IV} which is larger than D2/2.

Fig. 4 shows a self-piercing rivet 10^{V}, in which the thread portion 22^{V} has a linear portion 64^{V} and a tapered portion 66^{V}, wherein the tapered portion includes a step-portion which has an identical or smaller diameter than the root of the thread portion. In other words, the thread portion 22^{V} does not extend fully to the lower end 18 of the rivet 10^{V}.

The self-piercing rivet 10^{VI} shown in Fig. 5 includes a thread portion 22^{VI} which has a linear portion 64^{VI} and a tapered portion 66^{VI}, wherein the thread portion 22^{VI} is formed as a self-rolling thread portion which assists in forming or shaping a inner thread portion on the member stack M when being screwed out of the member stack M. This can be realized for example by a constant outer diameter of the thread portion, and a gradually increasing diameter of the root of the thread portion from top to bottom.

Fig. 6 shows a self-piercing rivet 10^{VII} which corresponds essentially to the embodiment of Fig. 2. However, the rivet 10^{VII} does not include necessarily an outer thread portion but includes an inner thread portion 22^{VII} at the inner circumference 44^{VII} of the shank 14. Further, similar to the embodiment of Fig. 2a, left side, the head of the rivet 10^{VII} of Fig. 6 includes a tool engagement feature 34^{VII} which is directly connected to the cavity of the rivet, so as to form a through hole 60.

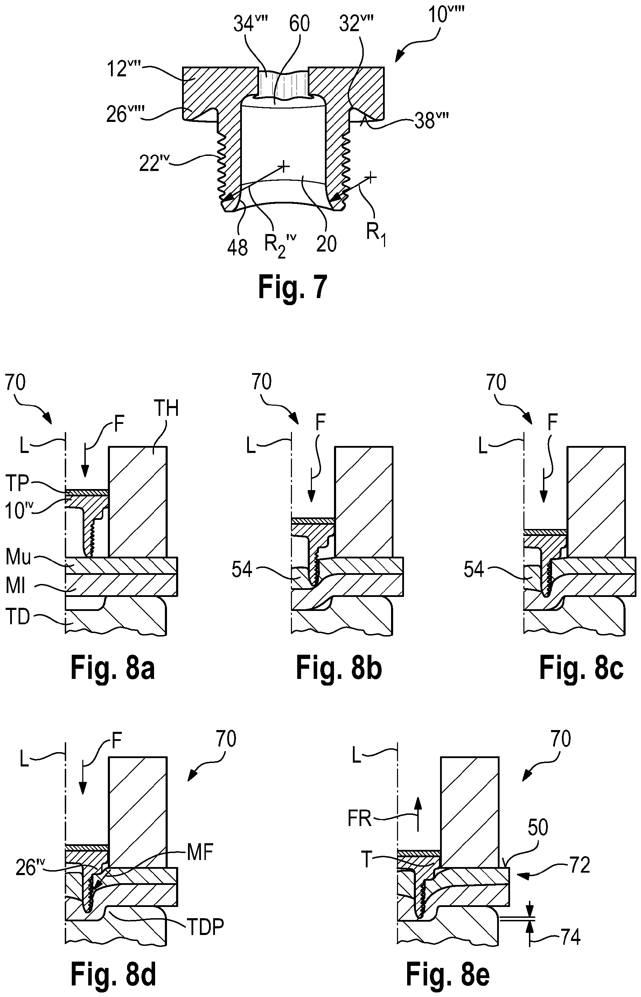

The self-piercing rivet 10^{VIII} which is shown in Fig. 7 is essentially a combination of the rivets shown in figures 6 and 3. The outer circumference of the shank includes a thread portion 22^{IV} as shown in Fig. 3. The head 12^{VII} corresponds to the head shown in Fig. 6, wherein a through hole 60 is formed throughout the rivet 10^{VIII}.

However, the rivet 10^{VIII} of Fig. 7 does not include an inner thread. Rather, the cavity 20 is shaped as is essentially shown in Fig. 3.

Fig. 8a to Fig. 8e show method steps of a method for setting a self-piercing rivet in a member stack M which includes an upper member Mu and a lower member MI in a rivet setting tool 70. The rivet setting tool 70 includes a tool die TD on which the member stack M is positioned. Further, the setting tool 70 includes a holder TH which is hollow and cylindrical, and which is used to clamp the member stack M between an upper surface of the tool die TD and a lower surface of the holder TH. Further, a tool punch TP is axially movable within the holder TH. The tool punch TP can be used to exert a punching force F onto the upper surface of a self-piercing rivet 10. In the case of figures 8a to 8e, a self-piercing rivet is used as is shown essentially in Fig. 3.

The tool die TD has an axial recess, which is circular in cross section, wherein the outer diameter of the recess is larger than the outer diameter of the shank and preferably smaller than the outer diameter of the head of the rivet 10^{IV}. Further, the recess of the tool die TD has preferably a diameter which is larger than the outer diameter of the pressure-inducing portion 26^{IV} of Fig. 3. In other embodiments the tool die diameter can be smaller than the outer diameter of the pressure-inducing portion, for example in the embodiment of Fig. 7.

The rivet setting tool 70 is not specifically adapted to the rivet 10^{IV}. Rather, self-piercing rivets which do not have any thread portion, can be set in a member stack by means of the setting tool 70.

Fig. 8a shows the start of the rivet setting process, wherein the shank ring portion 46 contacts the upper surface 50 of the upper member Mu and a force F is exerted axially on the rivet 10^{IV} by means of the tool punch TP.

As is shown in Fig. 8b, the rivet 10, on account of the force F, has severed the upper member Mu so as to create a punched out piece 54 within the cavity 20. Further, the outer thread portion 22 is not yet filled with material of the member stack M. The lower member MI is deformed so as to conform to the recess of the tool die TD.

In Fig. 8c, the rivet shank has completely penetrated the upper member Mu and has entered the lower member Ml. In Fig. 8c, the pressure-inducing surface 38^{IV} comes into contact with the upper surface 50 of the upper member Mu.

In Fig. 8d, the rivet has been further driven into the member stack M so that the pressure-inducing portion 26^{IV} presses material of the upper member Mu into the groove of the thread portion 22^{IV}, by creating a material flow MF which is partially axial and partially directed inwardly in the radial direction. In particular, the material of the upper member is deformed by the pressure-inducing portion, so that material of the lower member is caused to flow radially. Such radial material flow is also supported by the increasing pressure in the lower member on account of the interaction between the lower portion of the shank and the die.

In Fig. 8e, the rivet setting process has been completed so as to form a rivet joint 72, wherein the rivet has been driven into the material stack so that the head lower surface 32 of the head is essentially flush with the upper surface 50 of the upper member Mu. Further, on account of the pressure-inducing portion 26^{IV}, and possibly on account of the recess in the tool die TD, material has filled the groove of the thread portion 22^{IV} so as to create an axial interlock between the rivet 10^{IV} and the two members Mu, MI. Eventually the thread portion can be partially filled.

Further, the self-piercing rivet 10^{IV} is driven into the member stack to an extent that the lower member Mu has a residual thickness 74 in the area of the shank ring portion 46. In other words, the self-piercing rivet 10^{IV} has not fully penetrated the lower member Mu.

As is shown also in Fig. 8e, a torque T can be applied to the self-piercing rivet 10^{IV}, for example at an outer circumference thereof, in order to rotate the rivet and thereby create an axial reverse force F_{R} by which the rivet is removed from the deformed material stack M. In many cases, the rivet 10^{IV} can, subsequently, be re-screwed into the material stack again, wherein still a sufficient axial holding force between the members of the member stack is created.

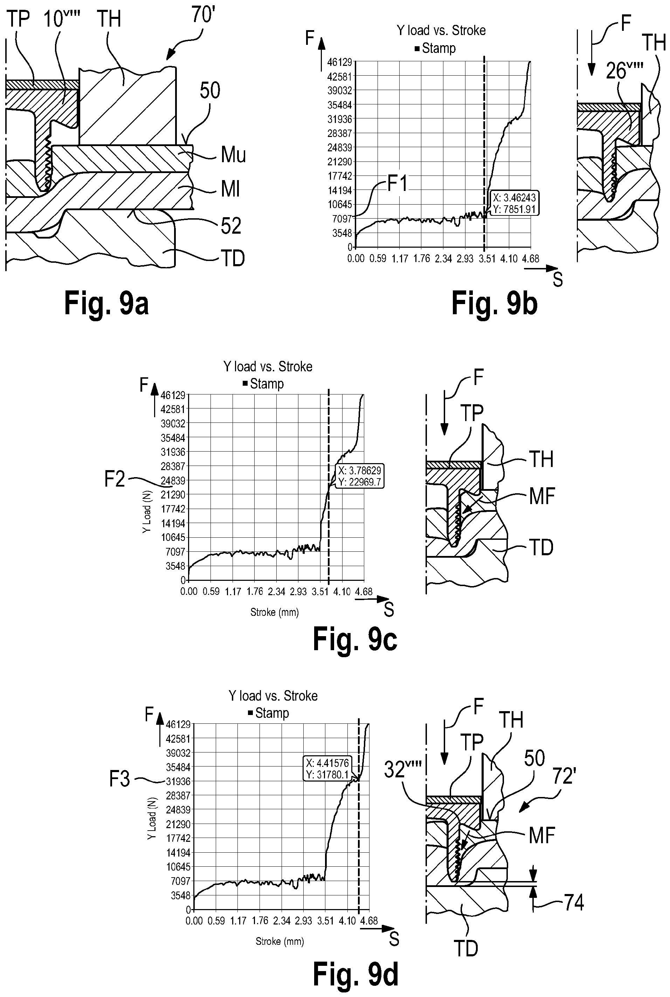

Figures 9a to 9d show another embodiment of a method for setting a self-piercing rivet. The method of Fig. 9a to 9d corresponds with respect to the method steps essentially to the method of Fig. 8a-8e. Same elements are therefore given the same reference numerals. In the following, only the differences will be explained.

In the method of Fig. 9a to 9d, a self-piercing rivet is used for creating a rivet joint 72', which is essentially identical to the rivet 10^{VIII} as shown in Fig. 7.

Further, a rivet setting tool 70' is used, which may be identical to the rivet setting tool 70 of Fig. 8a-8e.

Fig. 9a shows a state of the setting method which corresponds to the state of Fig. 8b. The shank of the rivet 10^{VIII} has penetrated the upper member Mu, the pressure-inducing portion 26^{VIII} has not yet contacted the upper surface 50 of the upper member Mu.

Fig. 9b corresponds to the state as shown in Fig. 8c. The pressure-inducing portion 26^{VIII} contacts the upper surface 50. The upper member Mu has been penetrated in full, and the lower end of the shank of the rivet has already been pressed into the lower member. The lower member has already been deformed on account of the shape of the tool die TD having the central recess. The central recess of the tool die TD may have an outer ring portion which is deeper than a middle portion of the recess, as is shown in Fig. 9a.

In Fig. 9b, the curve of punching force F versus displacement s of the punch is shown. It can be seen that the phase of the rivet setting method from contacting the member stack to the state as shown in Fig. 9b has been conducted with a force which is quite low and shown at F1 in Fig. 9b.

After the state of Fig. 9b, the pressure-inducing portion 26^{VIII} is also pressed into the upper member Mu which leads immediately to a steep increase of the force. Fig. 9c shows a state which corresponds essentially to the state of Fig. 8d, wherein the pressure-inducing portion 26^{VIII} has already entered the upper member Mu. Thereby, the material flow MF is created. The force in the state of Fig. 9c is shown at F2, which force is essentially higher than the force F1 of Fig. 9b.

The final state of the rivet setting method is shown in Fig. 9d, wherein the pressure-inducing portion 26^{VIII} has fully entered the upper member Mu and has created a material flow MF so as to fill the groove of the thread portion 22^{IV}. The lower surface 32^{VIII} of the head has, in this state, moved beyond the upper surface 50 of the upper member Mu. In the final stage of deformation of the material stack, a force greater than F3 is produced by the punch TP which force rises steeply because the die and the space under the pressure-inducing portion have been filled with material when the force F3 has been reached. Using this force increase above F3, the material of at least the lower member can be pressed radially into the thread portion. Preferably, F3 > 2 • F1.

The finalized rivet joint 72' as shown in Fig. 9d again produces a residual thickness 74' of the lower member MI, so that the shank does not fully penetrate the lower member MI.

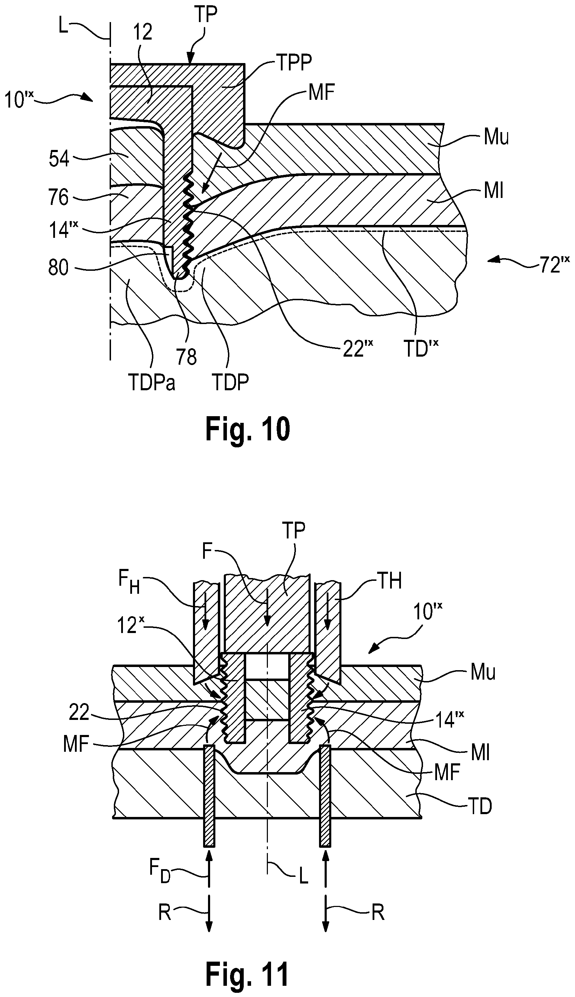

Fig. 10 shows a schematic view of another example of a self-piercing rivet 10^{IX}for illustrating a number of modifications. In this case, the shank 14^{IX} has a length in relation to the member stack M so that, in the finalized rivet joint 72^{IX}, a lower portion of the shank has fully penetrated the lower member MI so as to form a lower protruding portion 78.

In order to achieve this, the tool die TD^{IX} preferably includes an annular recess for accommodating the lower protruding portion 78.

The lower protruding portion 78 can be provided with an additional or alternative non-circular tool engagement feature 80, which in case of the self-piercing rivet 10^{IX} is provided at the inner circumference of the shaft. However, it could also be provided at the outer circumference thereof.

The head of the rivet may have an outer diameter which is essentially not larger than the diameter of the shank. Therefore, if the head has also a central opening corresponding in diameter to the inner diameter of the shank (not shown in Fig. 10), the rivet could also be screwed through the member stack. In this case, material of the upper member and material of the lower member should flow into the thread portion when setting the rivet.

The tool die TD^{IX} may have a tool die pressure-inducing portion TDP which is arranged on the outer circumference of the shank 14^{IX} and aids in pressing material into the thread portion 22^{IX} at the outer circumference of the shank 14^{IX}.

On the radial inner side of the shank 14^{IX}, the tool die TD^{IX} includes another tool die pressure-inducing portion TDPa. This additional tool die pressure-inducing portion TDPa may serve to assist in letting the shank 14 protrude from the lower member Ml. In the case of an inner thread portion of the shank, such radial inner tool die pressure-inducing portion TDPa might assist in pressing material into such inner thread portion.

Also, Fig. 10 shows a modification in which the self-piercing rivet 10^{IX} does not have any pressure-inducing portion 26. Rather, the tool punch TP comprises a tool punch pressure-inducing portion TPP which extends on the radial outside of the self-piercing rivet 10^{IX} and it used to create a material flow into the outer thread portion 22^{IX}. In case of an inner thread portion, the tool punch may have a central tool punch pressure-inducing portion TPP, together or as an alternative to the central tool die pressure-inducing portion TDPa. In the case of an inner thread portion, the rivet cannot be screwed through the member stack.

Each of the modifications shown in Fig. 10 can be combined with any of the other above embodiments of the present disclosure.

Fig. 11 shows another embodiment of a self-piercing rivet 10^{X} which has a shank 14^{x} and a head 12^{x}, wherein the head 12^{x} has an outer diameter which is identical to the outer diameter of the shank 14^{x}. Further, the rivet 10^{x} may be closed at the upper end or may, as is shown in Fig. 11, have an opening which coincides with the inner central cavity of the shank. In addition, the rivet 10^{x} has an outer thread 22.

The self-piercing rivet 10^{x} does not have a pressure-inducing portion. Rather, a holder TH is adapted to exert a pressure F_{H} onto the upper member Mᵤ, so that the holder TH enters into the member stack and thereby creates a material flow MF so as to fill the outer thread 22.

In addition, or as an alternative, the die TD may have an annular movable portion which is axially movable so as to exert pressure from below onto the member stack, as shown at Fd. The movable part of the tool die TD may have an inner diameter which corresponds to the outer diameter of the rivet 10^{x}. Further, the movable part may exert a force Fd onto the member stack, so that the movable part may intrude into the lower member M_{I}, in order to create material flow MF for filling the thread 22.

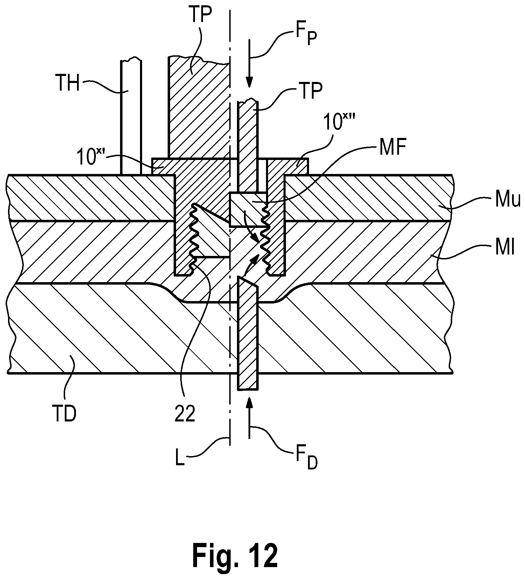

Fig. 12 shows on the left side an embodiment where a rivet 10^{XI} has an inner thread 22, wherein a bottom of the central cavity forms a peak so as to establish an oblique surface. The oblique surface may assist with pressing material of a punched-out part of the upper member Mᵤ and having material flow into the inner thread.

On the right hand side of Fig. 12, another embodiment of a rivet 10^{XII} having an inner thread is shown, wherein the rivet has an axial through-hole connected with the central cavity, so that a tool punch TP may act with a force F_{P} onto the punched-out part of the upper member in order to create the radial material flow MF. On the other hand, a tool die TD may have a central movable portion in order to exert a force F_{D} onto the lower member M_{L}, in order to create the material flow.

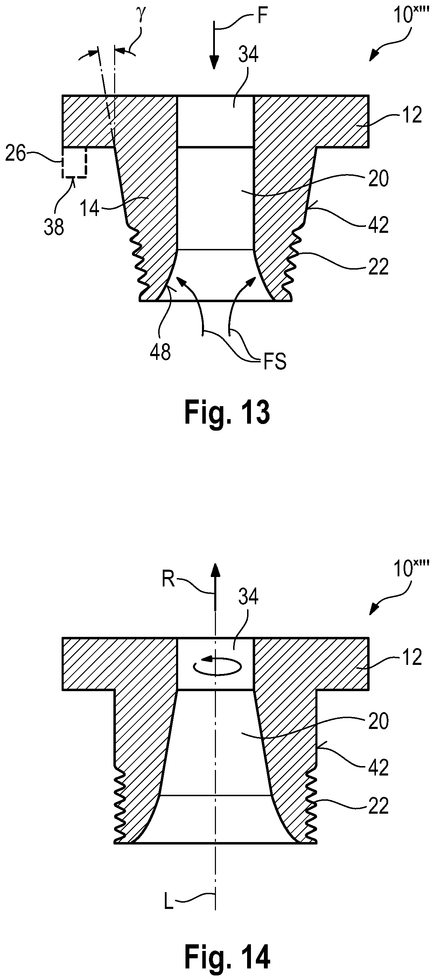

Fig. 13 shows a schematic view of another embodiment of a self-piercing rivet 10^{XIII} having a spreadable shank 14 with an outer thread portion 22, before being set, and Fig. 14 shows the rivet of Fig. 13 after having been set, so that its shank 14 is spread and an outer thread thereof is aligned with the joining axis L.

The non-deformed rivet shown in Fig. 13 has a head 12 and a shank 14 extending therefrom. The shank 14 has an internal cavity 20. The head 12 has a tool engagement feature 54 which, as has been described above, may be formed so as to be integral with the cavity 20. The shank 14 has an outer circumference 42 which is tapered so as to form a taper angle γ with respect to the longitudinal axis L. The taper angle γ may be in a range from -0.5° to -5.0 °, or more particularly from -0.5° to -3.0 °. The negative angle indicates that the outer circumference tapers from the head 12 to the end of the shank 14 so that the outer diameter of the shank 14 is larger in an area close to the head 12 than in an area close to the end of the shank 14.

A shank inner circumference lower portion 48 at the end of the shank 14 is formed has an arcuate shape which widens towards the end of the shank 14. In another embodiment, a conical shape may be provided.

When the rivet of Figure 13 is punched by a force F into the at least two members (not shown in figures 13 and 14), material of the upper and lower members enters the cavity 20 and, optionally with the assistance of a correspondingly formed die, spreads the shank 14. The spreading force which spreads the shank 14, is shown at FS in Figure 13.

The shaft 14 is spread in the rivet-setting process such that the outer circumference 42 is essentially no longer tapered with respect to the longitudinal axis L and is essentially aligned in parallel to the longitudinal axis L, as is shown in Figure 14. In other words, the outer circumference 42 of the shank 14 may be aligned with the longitudinal axis L within an angular range from -3.0° to +1.5°, and more preferably from -0.5° to +1.0°.

Figure 14 also shows that the rivet, after having been set, may be engaged at the tool engagement feature 34 in order to remove the rivet from the member stack, as is shown by an arrow R.

As is schematically indicated in Figure 13, the concept of providing the rivet with a spreadable shank 14 may be combined with the concept of providing the rivet with a pressure-inducing portion 26 which forms a pressure-inducing surface 38. In this case, the thread portion 22 is filled with material of the upper member and/or the lower member on account of a pressure exerted by the pressure-inducing portion 26 and on account of the spreading of the shank 14. The concept of providing the rivet with a spreadable shank 14 may be combined with any other pressure-inducing portion of the die and/or of the punch and/or of the holder of the tool 70.

The present disclosure, in general, relates to a self-piercing rivet which has a central cavity for receiving at least a part of the at least two members and is thus, in general, a semi-hollow self-piercing rivet. In addition, it comprises a thread portion which is arranged on at least a part of the shank.

In some embodiments, the self-piercing rivet can be configured so as to slightly deform radially and thereby let material flow into the groove of the thread portion. In the above-described embodiments, however, the self-piercing rivet does not necessarily or essentially not deform on being punched in a material stack at the lower end of the shank. This facilitates the removal of the rivet by applying a torque to the rivet. On the other hand, a pressure-inducing portion is provided for creating a pressing force which forces material to flow into the thread portion. The pressure-inducing portion can be provided at the self-piercing rivet itself, and/or at the tool die, and/or at the tool punch.

The material stack M includes the upper member Mu, which is preferably a steel member, particularly a high-strength steel member, like for example DP600. The lower member MI is preferably made of an aluminum alloy. The rivet 10 itself is preferably made of steel, particularly made of a steel alloy. As an example, the steel alloy is a boron-alloyed steel. The hardness of the rivet is preferably higher than H5.

The thickness of the upper member Mu is preferably in a range from 0.3 mm to 1.0 mm. The thickness of the lower member MI is preferably larger than the thickness of the upper member Mu, and is preferably in a range from 1.0 mm to 4.0 mm. In order to create a torque for removing the rivet from the material stack, the head may have a tool engagement feature at its outer circumference or at the circumference of a cavity. In addition, a lower protruding portion 78 of the rivet may be provided with a non-circular tool engagement feature 80 at the inner circumference and/or the outer circumference. In some cases, it may be an advantage if a torque is applied both at the head and at the lower end of the shank.

In order to facilitate and support a function of the self-piercing rivet on account to which the rivet can be re-screwed into the material stack again after having been removed, it can be considered to provide the thread portion, particularly a linear portion thereof, with an upper linear portion adjacent to the head, which has a larger diameter than a lower linear portion of the linear thread portion which is arranged adjacent to the lower end of the shank.

In the process of re-screwing, the thicker portion may at least partially be inserted into that part of the material stack which has only been contacted by the lower portion before being removed, so that a higher fastening torque can be achieved.

In other words, if to be reused, it is preferred if the thread portion has an upper thicker portion (with a larger diameter), and a lower thinner portion (with a smaller diameter than the upper portion).

In another embodiment, a repair element may be screwed into the member stack, wherein the repair element has a thread portion that has the same dimensions as the thread portion of the removed self-piercing rivet, or has at least one different dimension, particularly a larger dimension such as a slightly larger diameter.

The following Clauses define further embodiments which may be combined with any of appended claims and/or disclosed features:
Clause 1. A self-piercing rivet (10) for joining at least an upper member (Mu) and a lower member (Ml) by punching the self-piercing rivet (10) into the at least two members, the self-piercing rivet (10) having a head (12) and a shank (14) axially extending from the head (12),
   wherein the shank (14) has an upper end (16) adjacent to the head (12) and a lower end (18) distant from the head (12),
   wherein the shank (14) has a central cavity (20) for receiving at least a part of the at least two members (Mu, MI),
   wherein a thread portion (22) which is formed by at least one groove (24), is provided on at least a part of the shank (14) between the upper end (16) and the lower end (18), and
   wherein the self-piercing rivet (10) is configured to be deformed when being punched into at least two members (Mu, MI), particularly by spreading of the shank (14).
Clause 2. The self-piercing rivet (10) of Clause 1, wherein the thread portion (22) is inclined against a longitudinal axis of the shank (14) by a taper angle (γ), wherein the shank (14) is configured to be spread when being punched into the at least two members (Mu, MI) in a manner so that the thread portion is essentially aligned with the longitudinal axis, such that the rivet can be screwed out of the at least two members (Mu, MI).
Clause 3. The self-piercing rivet (10) of Clause 2, wherein the taper angle (γ) is in a range of larger than -0.5° and smaller than -3°.
Clause 4. The self-piercing rivet (10) of Clause 2 or 3, wherein the thread portion (22), after having been spread so that the rived is set, is essentially aligned with the longitudinal axis within an angular range from -0.5° to +1.0°.
Clause 5. A method of setting a self-piercing rivet (10), including the steps:
   positioning a member stack (Mu, MI) of at least an upper member and a lower member on a die (TD) of a setting tool (70),
   punching a self-piercing rivet (10) according to any one of Clauses 1 to 4 into the member stack (Mu, MI),
   wherein material of at least one of the at least two members of the member stack (Mu, MI) is pressed into the at least one groove (24) of the thread portion (22) on account of
      spreading of the shank (14), and, optionally, on account of
      - a pressure-inducing portion (26) of the self-piercing rivet (10), and/or
      - a pressure-inducing portion (TDP) of the die (TD), and/or
      - a pressure-inducing portion (TPP) of a punch (TP), and/or
      - a pressure-inducing portion of a holder (TH) of the setting tool (70).

### Reference Numerals

- 10: self-piercing rivet
- 12: head
- 14: shank
- 16: upper end
- 18: lower end
- 20: cavity
- 22: thread portion
- 24: groove
- 26: pressure-inducing portion (PI portion) of rivet
- 30: head upper surface
- 32: head lower surface (upper member contact part)
- 34: tool engagement feature
- 36: head outer circumference
- 38: pressure-inducing surface
- 40: outer circumference of 26
- 42: shank outer circumference
- 44: shank inner circumference
- 46: shank ring portion (cutting portion)
- 48: shank inner circumference lower portion (adjacent to 46)
- 50: upper surface of upper member
- 52: lower surface of lower member
- 54: piece punched-out (slug)
- 60: through hole
- 64: thread linear portion
- 66: thread tapered portion
- 70: rivet setting tool
- 72: rivet joint
- 74: residual thickness
- 76: lower piece punched-out
- 78: lower protruding portion
- 80: additional tool engagement feature

- L: longitudinal axis
- D1: head outer diameter
- D2: shank outer diameter
- D3: shank inner diameter
- D4: PI portion outer diameter
- D5: ring portion width
- R1: radius of shank inner circumference lower portion
- R2: radius thread tapered portion
- L1: rivet length
- L2: head length
- L3: shank length
- L4: pressure-inducing portion length
- L5: thread length
- L6: cavity length
- M: member stack
- Mu: upper member
- MI: lower member
- F: punching force
- FH: holder force
- FS: spreading force
- R: removement direction
- TP: tool punch (70)
- TPP: pressure-inducing portion of punch
- TD: tool die (70)
- TDP: pressure-inducing portion of die
- TH: holder (70)
- MF: material flow
- α: angle pressure-inducing surface to axis L
- γ: taper angle of spreadable shank to axis L

## Claims

1. A self-piercing rivet (10) for joining at least an upper member (Mu) and a lower member (Ml) by punching the self-piercing rivet (10) into the at least two members, the self-piercing rivet (10) having a head (12) and a shank (14) axially extending from the head (12),
wherein the shank (14) has an upper end (16) adjacent to the head (12) and a lower end (18) distant from the head (12),
wherein the shank (14) has a central cavity (20) for receiving at least a part of the at least two members (Mu, MI), and
wherein a thread portion (22) which is formed by at least one groove (24), is provided on at least a part of the shank (14) between the upper end (16) and the lower end (18).

2. The self-piercing rivet (10) of claim 1, wherein the self-piercing rivet (10) comprises a pressure-inducing portion (26) which is configured to contact an upper surface (50) of the upper member (Mu) and to subsequently press material of at least one of the at least two members (Mu, MI) into the at least one groove (24) of the thread portion (22) when the self-piercing rivet (10) is punched into the at least two members (Mu, Ml).

3. The self-piercing rivet (10) of claim 1 or 2, wherein the thread portion (22) is an outer thread portion (22).

4. The self-piercing rivet (10) of claim 2 and 3, wherein the pressure-inducing portion (26) is arranged between an upper member contact part (32) of the head (12), which is configured to contact the upper surface (50) of the upper member (Mu) when in a set state, and an upper end of the outer thread portion (22).

5. The self-piercing rivet (10) of any one of claims 2 to 4, wherein the pressure-inducing portion (26) comprises a pressure-inducing surface (38) which extends radially or with a downward inclination or with an upward inclination with respect to an axis (L) of the shank (14).

6. The self-piercing rivet (10) of any one of claims 3 to 5, wherein an outer shank portion from which the pressure-inducing surface (38) extends, is axially arranged between an upper end of the outer thread portion (22) and an upper member contact part (32) of the head (12), which is configured to contact the upper surface (50) of the upper member (Mu) when in a set state.

7. The self-piercing rivet (10) of claim 5 or 6, wherein the pressure-inducing surface (38) extends with respect to the axis (L) of the shank (14) at an angle (α) in a range from 30° to 110°, inclusive, preferably in a range from 50° to 90°inclusive.

8. The self-piercing rivet (10) of any of claims 1 to 7, wherein the thread portion (22) includes a linear portion (64) and a tapered portion (66), the tapered portion (66) being arranged closer to the lower end of the shank (14) than the linear portion (64), wherein it is preferred if the tapered portion (66) is ogive-shaped.

9. The self-piercing rivet (10) of any one of claims 1 to 8, wherein
- the self-piercing rivet (10) is configured to not be deformed when being punched into at least two members (Mu, MI), or
- the self-piercing rivet (10) is configured to be deformed when being punched into at least two members (Mu, MI), particularly by spreading of the shank (14).

10. The self-piercing rivet (10) of any one of claims 1 to 9, wherein
- at least one of the head (12) and the shank (14) has a tool engagement feature (34), and/or
- the self-piercing rivet (10) has an axial through hole (60) which forms the cavity, and/or
- the thread portion (22) includes a fine thread portion, and/or
- the thread portion (22) includes a thread-rolling thread portion, and/or
- the self-piercing rivet (10) is configured to be punched into the at least two members (Mu, MI), the upper member (Mu) of which being made of steel, preferably high-strength steel, and/or
- the self-piercing rivet (10) is configured to be punched into the at least two members (Mu, MI), the lower member (Ml) of which being made of an aluminum alloy, and/or
- the self-piercing rivet (10) is configured to be punched into the at least two members (Mu, MI), the upper member (Mu) of which having a thickness in a range from 0.3 mm to 2.0 mm, inclusive, preferably in a range from 0.5 mm to 1.6 mm, inclusive, and/or
- the self-piercing rivet (10) is configured to be punched into the at least two members (Mu, MI), the lower member (MI) of which having a thickness in a range from 1.0 mm to 4.0 mm, inclusive, preferably in a range from 2.0 mm to 3.0 mm, inclusive, and/or
- the self-piercing rivet (10) is made of steel, preferably of a steel alloy, particularly of a boron-alloyed steel alloy, and/or
- the self-piercing rivet (10) has a hardness in a range of H4 (480HV+-30HV10) to H6 (555+-30HV10), or higher.

11. A method of setting a self-piercing rivet (10), including the steps:
positioning a member stack (Mu, MI) of at least an upper member and a lower member on a die (TD) of a setting tool (70),
punching a self-piercing rivet (10) according to any one of claims 1 to 10 into the member stack (Mu, MI),
wherein material of at least one of the at least two members of the member stack (Mu, MI) is pressed into the at least one groove (24) of the thread portion (22) on account of
- a pressure-inducing portion (26) of the self-piercing rivet (10), and/or
- a pressure-inducing portion (TDP) of the die (TD), and/or
- a pressure-inducing portion (TPP) of a punch (TP), and/or
- a pressure-inducing portion of a holder (TH) of the setting tool (70), and/or
- a spreading of the shank (14).

12. A method of removing a self-piercing rivet (10) which has been set in a member stack (Mu, MI) by the method of claim 11, from the member stack by rotating the self-piercing rivet (10) so that the self-piercing rivet (10), aided by the thread portion, is screwed out of the member stack (Mu, MI).

13. A method of repairing a joint made by a method of claim 11 using a self-piercing rivet of any one of claims 1 to 10, including the step of removing the self-piercing rivet by the method of claim 12, and a step of
- screwing the removed self-piercing into the member stack; or
- screwing a new self-piercing rivet, which is of the same type as the removed self-piercing rivet, into the member stack; or
- screwing a repair element into the member stack, the repair element having a shank as the removed self-piercing rivet and a thread portion on at least a part of the shank, wherein the repair element thread portion has the same dimensions as the thread portion of the removed self-piercing rivet or has at least one different dimension, particularly larger dimension.

14. A self-piercing rivet (10) setting tool, preferably for conducting the method of claim 11, comprising
a die (TD) on which a member stack (Mu, MI) of at least an upper member and a lower member can be positioned, and
a punch (TP) which is adapted to punch a self-piercing rivet (10) according to any one of claims 1 to 10 into the member stack (Mu, MI).

15. The self-piercing rivet (10) setting tool of claim 14, wherein at least one of the die (TD) and the punch (TP) is configured to press material of at least one of the at least two members of the member stack (Mu, MI) into the at least one groove (24) of the thread portion (10) when the self-piercing rivet (10) is punched into the member stack (Mu, MI).
